# EUROPEAN PATENT APPLICATION

(11) **EP 2 262 198 A1**
(43) Date of publication of application: **15.12.2010**
(21) Application number: 08715034.8
(22) Date of filing: 25.03.2008
(51) Int. Cl.: H04L 29/06

(54) **A METHOD AND APPARATUS FOR PROVIDING A PROMPT INFORMATION TO A USER IN A COMMUNICATION SYSTEM**

(71) Applicant: Lucent Technologies Inc., Murray Hill, NJ 07974-0636 (US)
(72) Inventor: ZHANG, Junli, Qingdao Shandong 266101 (CN); LIU, Yong, Qingdao Shandong 266101 (CN); ZHAO, Ke, Qingdao Shandong 266101 (CN)
(74) Representative: Hervouet, Sylvie
(86) International application number: PCT/CN2008/000582
(87) International publication number: WO 2009/117846

(57) **Abstract**

The present invention proposes a method and apparatus for providing a user with notification information during a call period in a telecommunication system based on SIP protocol. In the present invention, after receiving a calling response message from a network server, a user equipment retrieves notification information from the calling response message and presents it to the user by a display screen (e.g. the display screen of a cell phone). If there needs several communications between the user equipment and the network server, the user only needs to choose corresponding service according to the notification information presented on the display screen, wherein the notification information presented on the display screen comprises one item or a plurality of items for the user to choose. It saves time and avoids the misoperation due to the fact that the user didn't listen to the voice notification information clearly.

## Description

### FIELD OF THE INVENTION

The present invention relates to a telecommunication network based on SIP protocol, especially to a user equipment and a network server in the telecommunication network based on SIP protocol.

### BACKGROUND OF THE INVENTION

In the existing telecommunication network based on SIP protocol, the communication between a user equipment (e.g. cell phone) and a network server (e.g. call center) is mainly accomplished as follows:

Firstly, the user equipment generates a calling request message according to the user's input (e.g. the user types in a string of service code through the keyboard of the cell phone), and sends it to the network server.

After receiving the calling request message from the user equipment, the network server generates a corresponding calling response message according the calling request message, wherein the calling response message comprises the service content that the user equipment will announce to the user.

Then, the network server sends the calling response message to the user equipment.

After receiving the calling response message from the network server, the user equipment retrieves the corresponding service content from the calling response message and announces the service content to the user.

As to the condition that there are several communications between the user equipment and the network server, when the user equipment announces the service content to the user, the user must finish listening to all the service content (generally, the service content is called as voice notification information) before the next input because voice can only be played sequentially.

To be specific, after finishing listening to all the voice notification information, the user continues to choose the corresponding service according to the voice notification information.

The user equipment generates an option request message according to the user's input based on the voice notification information (e.g. the user types in a number/symbol through the keyboard of the cell phone) and sends it to the network server.

After receiving the option request message from the user equipment, the network server generates a corresponding option response message according to the option request message, wherein the option response message comprises the service content that the user equipment will announce to the user.

Then, the network server sends the option response message to the user equipment.

After receiving the option response message from the network server, the user equipment retrieves the corresponding service content from the option response message and announces the service content to the user.

Certainly, there could be further communication between the user equipment and the network server until the user equipment announces the service content that the user wants to obtain to the user.

Obviously, the user can eventually obtain what he/she wants by the voice notification of the user equipment and the communication between the user terminal and the network server.

However, as to the condition that there must be several communications between the user equipment and the network server so that the user equipment can announce the service content that the user wants to obtain to the user, for each communication between the user equipment and the network server, the user must finish listening to all the voice notification information before his/her next input. It's a waste of time for the user. Moreover, it is more likely for the user to make misoperation because the user didn't listen to the voice notification information clearly, which will bring great inconvenience to the user.

### SUMMARY OF THE INVENTION

To this end, the present invention proposes a method and apparatus for providing a user with notification information during a call period in a telecommunication system based on SIP protocol. In the present invention, after receiving a calling response message from a network server, a user equipment retrieves notification information from the calling response message and presents the notification information to the user by a display screen (e.g. the display screen of a cell phone). If there needs several communications between the user equipment and the network server, then the user only need to choose corresponding service according to the notification information presented on the display screen, wherein the notification information presented on the display screen comprises one item or a plurality of items for the user to choose.

According to the first aspect of the present invention, a method of obtaining notification information from a network server during a call period in a user equipment in a telecommunication system based on SIP protocol is provided, wherein the method comprises: a. receiving a call response message from the network server after the call is established; b. retrieving notification information from the call response message and presenting the notification information to a user by a display screen.

Preferably, when the notification information comprises one item or a plurality of items for the user to choose, after step b, the method further comprises: c. generating an option request message according to the user's option for the one item or one of the plurality of items; d. sending the option request message to the network server; e. receiving an option response message corresponding to the option request message form the network server; f. retrieving another notification information from the option response message and presenting the another notification information to the user by a display screen; repeating step c to step f, until predetermined condition is satisfied.

According to the second aspect of the present invention, a method of providing notification information to a user equipment during a call period in a network server in a telecommunication system based on SIP protocol is provided, wherein the method comprises: A. sending a call response message to the user equipment after the call is established, wherein the call response message comprises notification information to present to a user.

Preferably, after step A, the method further comprises: B. receiving an option request message from the user equipment; C. generating an option response message corresponding to the option request message, wherein the option response message comprises another notification information to present to the user; D. sending the option response message to the user equipment.

According to the third aspect of the present invention, an obtaining apparatus for obtaining notification information from a network server during a call period in a user equipment in a telecommunication system based on SIP protocol is provided, wherein the obtaining apparatus comprises: a first receiving means for receiving a call response message from the network server after the call is established; and a first display means for retrieving notification information from the call response message and presenting the notification information to a user by a display screen.

According to the fourth aspect of the present invention, a providing apparatus for providing notification information to a user equipment during a call period in a network server in a telecommunication system based on SIP protocol is provided, wherein the providing apparatus comprises: a second sending means for sending a call response message to the user equipment after the call is established, wherein the call response message comprises notification information to present to a user.

In the present invention, after receiving the calling response message from the network server, the user equipment retrieves notification information from the calling response message and presents the notification information to the user by a display screen (e.g. the display screen of a cell phone). If there needs several communications between the user equipment and the network server, the user only need to choose corresponding service according to the notification information presented on the display screen, wherein the notification information presented on the display screen comprises one item or a plurality of items for the user to choose.

Compared with the prior art that the user must finish listening to all the voice notification information before his/her next input, in the present invention, the user equipment presents all the notification information to the user by a display screen and the user only needs to choose corresponding service according to the notification information presented on the display screen, which saves time and avoids the misoperation due to the fact that the user didn't listen to the voice notification information clearly.

### BRIEF DESCRIPTION OF THE DRAWINGS

Other features, objects and advantages of the present invention will be more apparent by reference to the following detailed description of non-limited exemplary embodiments, when taken in conjunction with the accompanying drawings:
Fig. 1 is a network schematic view of providing a user with notification information in a telecommunication system based on SIP protocol according to the present invention;
Fig. 2 is a flowchart of a system method of providing a user with notification information in a telecommunication system based on SIP protocol according to an embodiment of the present invention;
Fig. 3 is a block diagram of an obtaining apparatus for obtaining notification information from a network server during a call period in a user equipment in a telecommunication system based on SIP protocol according to an embodiment of the present invention; and
Fig. 4 is a block diagram of a providing apparatus for providing notification information to a user equipment during a call period in a network server in a telecommunication system based on SIP protocol according to an embodiment of the present invention.

In the accompanying drawings, same or similar reference signs refer to same or similar components.

### DETAILED DESCRIPTION OF PREFERRED EMBODIMENTS

Referring to the accompanying drawings, a detailed description will be given to the present invention in terms of embodiments.

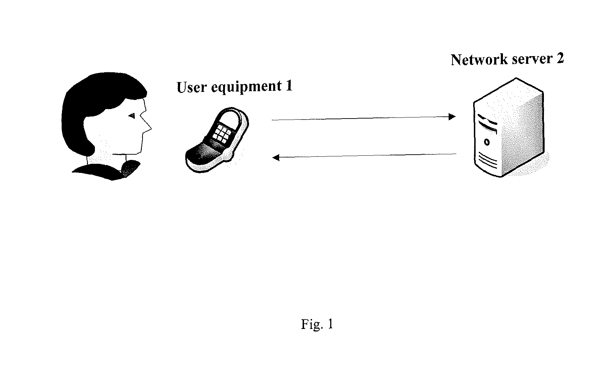

Fig. 1 is a network schematic view of providing a user with notification information in a telecommunication system based on SIP protocol according to the present invention.

The telecommunication system shown in Fig.1 is based on Session Initiation Protocol (SIP), wherein the user equipment 1 runs SIP protocol, and the network server 2 runs SIP protocol.

The user equipment 1 includes but is limited to a cell phone, PDA, video telephone. The key point of the present invention is that after the user equipment 1 receives a call response message from the network server 2, it retrieves notification information from the call response message, and then presents the notification information to a user by a display screen. Therefore, the user equipment mentioned in the present invention must comprise a display screen, which is used to present the notification information to the user by the display screen.

The network server 2 includes but is not limited to a call center, which is used to provide the user with the notification information.

To be specific, when a user dials a service code to obtain certain service, firstly, the user inputs the service code through the user equipment 1(e.g. cell phone). Then, the user equipment 1 generates a calling request message according the service code and sends it to the network server 2.

The network server 2 receives the calling request message from the user equipment 1 and establishes the call link. Then, the network server 2 generates a corresponding calling response message according to the calling request message and sends it to the user equipment 1, wherein the call response message comprises notification information which is used to present to the user by the user equipment 1.

After receiving the calling response message from the network server 2, the user equipment 1 retrieves notification information from the calling response message and presents it to the user by a display screen.

Preferably, if the notification information presented on the display screen of the user equipment 1 comprises one item or a plurality of items for the user to choose, i.e., the user must continue to choose to obtain the service content that he/she wants, then the user needs to choose the one item or one of the plurality of items contained in the notification information so as to realize further communication between the user equipment 1 and the network server 2.

With the user's further option, the user equipment 1 generates an option request message according to the user's option and sends it to the network equipment 2.

After receiving the option request message from the user equipment 1, the network server 2 generates a corresponding option response message according to the option request message and sends it to the user equipment 1, wherein the option response message comprises another notification information which is used to present to the user by the user equipment 1.

After receiving the option response message from the network server 2, the user equipment 1 retrieves the another notification information and presents it to the user by the display screen.

If the another notification information presented on the display screen of the user equipment 1 is the service content that the user wants, then the communications between the user equipment 1 and the network server 2 is over.

Of course, if the notification information presented on the display screen of the user equipment 1 is not the service content that the user wants, i.e., the user must continue to choose to obtain the service content that he/she wants, then the aforesaid steps between the user equipment 1 and the network server 2 should be performed repeatedly until the user obtains what he/she wants. It should be understood by those skilled in the art and will not be described in details hereon.

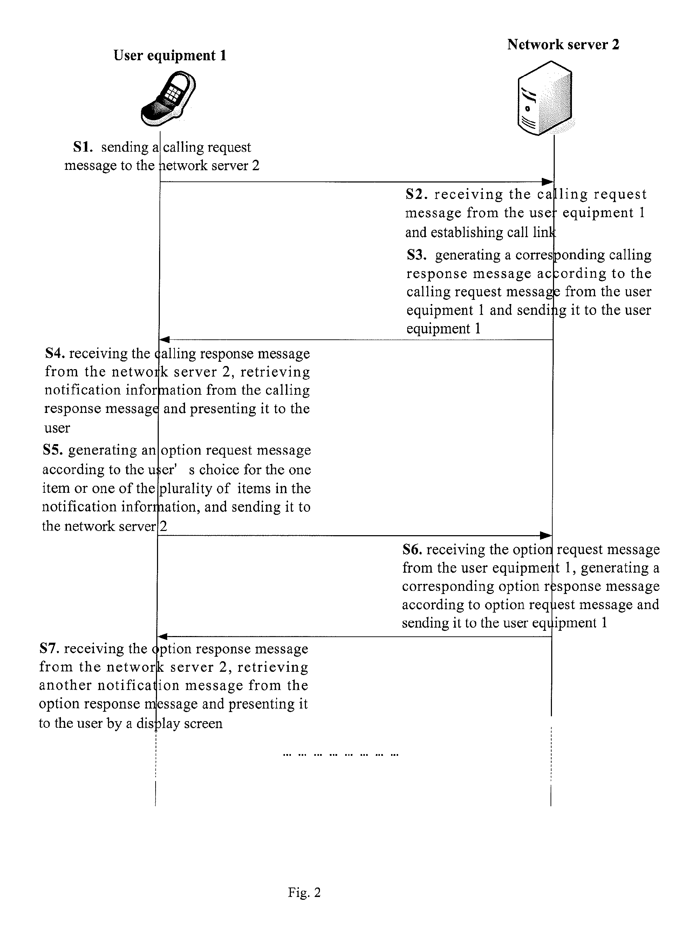

Hereinafter, referring to fig. 2, a detailed description will be given to the first aspect and the second aspect of the present invention.

Fig. 2 is a flowchart of a system method of providing a user with notification information in a telecommunication system based on SIP protocol according to an embodiment of the present invention.

The telecommunication system shown in Fig.2 is based on Session Initiation Protocol (SIP), wherein the user equipment 1 runs SIP protocol, and the network server 2 runs SIP protocol.

The user equipment 1 includes but is limited to a cell phone, PDA, video telephone. The key point of the present invention is that after the user equipment 1 receives a call response message from the network server 2, the user equipment 1 retrieves notification information which comprises one item or a plurality of items from the call response message, and then presents the notification information to a user by a display screen. Therefore, the user equipment mentioned in the present invention must comprise a display screen, which is used to present the notification information to the user by the display screen.

The network server 2 includes but is not limited to a call center, which is used to provide the user with notification information.

Firstly, in step S1, the user equipment 1 sends a calling request message to the network server 2.

To be specific, the user equipment 1 generates the calling request message according to the user's input, and sends it to the network server 2.

Further, taking a cell phone as an example, the user's input comprises the user typing in a string of service code through the keyboard of the cell phone, or the user typing in a string of service code through the touch panel of the cell phone.

Of course, for the cell phone with voice recognition, the user could types in a string of service code through voice. It should be understood by those skilled in the art and will not be described in details hereon.

Secondly, in step S2, the network server 2 receives the calling request message from the user equipment 1 and establishes the call link.

The content contained in the calling request message varied with the service code.

Then, in step S3, the network server 2 generates a corresponding calling response message according to the calling request message from the user equipment 1 and sends it to the user equipment 1.

To be specific, after receiving the calling request message from the user equipment 1, the network server 2 retrieves information of the service code from the calling request message, and generates a calling response message according to the information of the service code, wherein the calling response message comprises notification information corresponding to the information of the service code.

More specifically, the network server 2 looks for the notification information corresponding to the information of the service code from the database, and generates a calling response message.

Further, with the different service code input by the user, the notification information generated by the network server 2 varies with the service code in the calling request message.

For example, when the user types in the service code of a bank to inquire the accounts of a credit card, then the notification information generated by the network server 2 according to the calling request message from the user equipment 1 comprises day trade information, historical trade information, or residual account.

When the user types in the service code of songs hotline to choose a song, then the notification information generated by the network server 2 according to the calling request message from the user equipment 1 comprises song names that the user could choose.

After generating the calling response message according to the information of the service code, the network server 2 sends the calling response message to the user equipment 1, wherein the calling response message comprises the notification information corresponding to the information of the service code.

Then, in step S4, the user equipment 1 receives the calling response message from the network server 2, retrieves the notification information from the calling response message and presents it to the user by the display screen.

To be specific, firstly, the user equipment 1 receives the calling response message from the network server 2, and retrieves the notification information from the calling response message.

Then, the user equipment 1 generates corresponding display content (for example, menu) according to the notification information in the calling response message, and presents it to the user by the display screen to obtain what he/she wants or continue to choose.

As to the condition that there only needs one communication between the user equipment 1 and the network server 2 that the user could obtain what he/she wants, the notification information presented on the display screen is what the user wants.

As to the condition that there needs several communications between the user equipment 1 and the network server 2 that the user could obtain what he/she wants, the notification information presented on the display screen comprises one item or a plurality of items for the user to choose. With the user's option on the notification information, there will be further several communications between the user equipment 1 and the network server 2 until the notification information presented on the display screen is what the user wants.

Preferably, when the notification information presented on the display screen comprises one item or a plurality of items for the user to choose, then, in step S5, the user equipment 1 generates an option request message according to the user's option for the one item or one of the plurality of items, and sends it to the network server 2.

Hereinafter, taking the user inquiring the account of a credit card of a bank as an example, a detailed description will be given to step S5.

Assuming that the notification information presented on the display screen of the user equipment 1 comprises two items, one item is "inquiring day trade records" and the other item is "inquiring historical trade records".

To be specific, if the user only needs to inquire the day trade information, then the user chooses the item of "inquiring day trade records".

Further, the user could types in a digit representing the item of "inquiring day trade records" (e.g. the digit "9") on the keyboard of the user equipment 1 to choose the item of "inquiring day trade records".

If the display screen of the user equipment 1 is a touch panel, then the user could click the item of "inquiring day trade records" on the screen to make the choice.

With the user's choice for the item of "inquiring day trade records", the user equipment 1 generates a corresponding option request information according to the user's choice. Further, the option request information comprises the indication information of the user's choice (hereon, the indication information of inquiring day trade records). With the indication information of inquiring day trade records in the option request information, the network server 2 could generates an option response message according to the indication information.

After generating the corresponding option request message according to the user's choice, the user equipment 1 sends the option request message to the network server 2.

Then, in step S6, the network server 2 receives the option request message from the user equipment 1, generates a corresponding option response message according to the option request message and sends it to the user equipment 1.

To be specific, after receiving the option request message from the user equipment 1, the network server 2 retrieves the indication information of inquiring day trade records in the option request message, and looks for the notification information corresponding to the indication information of inquiring day trade records from the database according to the indication information of inquiring day trade records.

Further, the notification information comprises the day trade information of the account.

Then, the network server 2 generates the option response message corresponding to the option request message according to the notification information and sends it to the user equipment 1.

Then, in step S7, the user equipment 1 receives the option response message from the network server 2, retrieves another notification information from the option response message and presents it to the user by the display screen.

To be specific, the user equipment 1 receives the option response message from the network server 2 and retrieves the another notification information from the option response message, wherein the notification information comprises the day trade information of the account.

Then, the user equipment 1 generates corresponding display content (e.g. menu) according to the notification information and presents it to the user to obtain what he/she wants, i.e. the day trade information of the account.

After browsing the service content that he/she wants, the user could stop the communications between the user equipment 1 and the network server 2 through the input of the indication information which indicates the stop of the communications. For instance, the user could stop the communications between the user equipment 1 and the network server 2 by clicking the key of "exit" on the touch panel of the user equipment 1.

Of course, if there is no further input information received from the user during predetermined time duration, the user equipment 1 will stop the communications between the user equipment 1 and the network server 2 automatically.

The user could also stop the communications between the user equipment 1 and the network server 2 at any time during the communications.

Abovementioned communications refers to the condition of there being two communications between the user equipment 1 and the network server 2 that the user eventually obtain what he/she wants. The person skilled in this art could understand that there could be several communications between the user equipment 1 and the network server 2 that the user obtain what he/she wants.

In another preferable embodiment, the user types in the service code of a songs hotline to choose a song, then, in step S5, the notification information presented on the display screen of the user equipment 1 comprises song names that the user could choose.

To be specific, after the user chooses a song (e.g. "the cowboy is busy" by Jay Chou) from the notification information, the user equipment 1 generates a corresponding option request message according to the user's choice.

Further, the option request message comprises the indication information of the song name, i.e. "the cowboy is busy" the user has chosen. With the indication information of the song name contained in the option request message, the network server 2 could generate a corresponding option response message.

After generating the option request message according to the user's choice, the user equipment 1 sends it to the network server 2.

Then, in step S6, after receiving the option request message from the user equipment 1, the network server 2 retrieves the indication information of the song name that the user has chosen from the option request message, and looks for a song corresponding to the indication information of the song name from the database according to the indication information of the song name.

Then, the network server 2 sends the RTP packet with the song that the user has chosen to the user equipment 1.

Finally, in step 7, the user equipment 1 receives the RTP packet from the network server 2 and plays the music to the user.

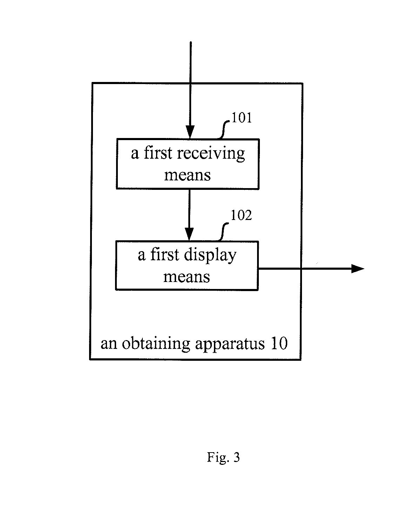

Hereinafter, referring to fig. 3, a detailed description will be given to the third aspect of the present invention.

The telecommunication system shown in Fig.3 is based on Session Initiation Protocol (SIP), wherein the user equipment 1 runs SIP protocol, and the network server 2 runs SIP protocol.

The user equipment 1 includes but is limited to a cell phone, PDA, video telephone. The key point of the present invention is that after the user equipment 1 receives a call response message from the network server 2, the user equipment 1 retrieves notification information which comprises one item or a plurality of items from the call response message, and then presents the notification information to a user by a display screen. Therefore, the user equipment mentioned in the present invention must comprise a display screen, which is used to present the notification information to the user by the display screen.

The network server 2 includes but is not limited to a call center, which is used to provide the user with the notification information.

Fig. 3 is a block diagram of an obtaining apparatus for obtaining notification information from a network server during a call period in a user equipment in a telecommunication system based on SIP protocol according to an embodiment of the present invention. Wherein, an obtaining apparatus 10 comprises a first receiving means 101 and a first display means 102.

Firstly, the user equipment 1 sends a calling request message to the network server 2.

To be specific, the user equipment 1 generates the calling request message according to the user's input, and sends it to the network server 2.

Further, taking a cell phone as an example, the user's input comprises the user typing in a string of service code through the keyboard of the cell phone, or the user typing in a string of service code through the touch panel of the cell phone.

Of course, for the cell phone with voice recognition, the user could types in the service code through voice. It should be understood by those skilled in the art and will not be described in details hereon.

Secondly, the network server 2 receives the calling request message from the user equipment 1 and establishes the call link.

The content contained in the calling request message varied with the service code.

Then, the network server 2 generates a corresponding calling response message according to the calling request message from the user equipment 1 and sends it to the user equipment 1.

To be specific, after receiving the calling request message from the user equipment 1, the network server 2 retrieves information of the service code from the calling request message, and generates a calling response message according to the information of the service code, wherein the calling response message comprises the notification information corresponding to the information of the service code.

More specifically, the network server 2 looks for the notification information corresponding to the information of the service code from the database, and generates a calling response message.

Further, with the different service code input by the user, the notification information generated by the network server 2 varies with the service code in the calling request message.

After generating the calling response message according to the information of the service code, the network server 2 sends the calling response message to the user equipment 1, wherein the calling response message comprises the notification information corresponding to the information of the service code.

Then, the first receiving means 101 contained in the obtaining apparatus 10 of the user equipment 1 receives the calling response message from the network server 2, and then the first display means 102 contained in the obtaining apparatus 10 of the user equipment 1 retrieves the notification information from the calling response message and presents it to the user by the display screen.

To be specific, the first receiving means 101 firstly receives the calling response message from the network server 2.

Then, the first display means 102 retrieves the notification information from the calling response message, generates corresponding display content (for example, menu) according to the notification information in the calling response message, and presents it to the user by the display screen to obtain what he/she wants or continue to choose.

As to the condition that there only needs one communication between the user equipment 1 and the network server 2 that the user could obtain what he/she wants, the notification information presented on the display screen is what the user wants.

As to the condition that there needs several communications between the user equipment 1 and the network server 2 that the user could obtain what he/she wants, the notification information presented on the display screen comprises one item or a plurality of items for the user to choose. With the user's option on the notification information, there will be further several communications between the user equipment 1 and the network server 2 until the notification information presented on the display screen is what the user wants.

Preferably, when the notification information presented on the display screen comprises one item or a plurality of items for the user to choose, then, a first generating means (not shown in Fig.3) contained in the obtaining apparatus 10 of the user equipment 1 generates an option request message according to the user's option for the one item or one of the plurality of items, and then a first sending means (not shown in Fig.3) contained in the obtaining apparatus 10 of the user equipment 1 sends it to the network server 2.

Hereinafter, taking the user inquiring the account of a credit card of a bank as an example, a detailed description will be given to the functions of the first generating means and the first sending means.

Assuming that the notification information presented on the display screen of the user equipment 1 comprises two items, one item is "inquiring day trade records" and the other item is "inquiring historical trade records".

To be specific, if the user only needs to inquire the day trade information, then the user chooses the item of "inquiring day trade records".

Further, the user could types in a digit representing the item of "inquiring day trade records" (e.g. the digit "9") on the keyboard of the user equipment 1 to choose the item of "inquiring day trade records".

If the display screen of the user equipment 1 is a touch panel, then the user could click the item of "inquiring day trade records" on the screen to make the choice.

With the user's choice for the item of "inquiring day trade records", the first generating means generates a corresponding option request information according to the user's choice. Further, the option request information comprises the indication information of the user's choice (hereon, the indication information of inquiring day trade records). With the indication information of inquiring day trade records in the option request information, the network server 2 could generates an option response message according to the indication information.

After the first generating means generates the corresponding option request message according to the user's choice, the first sending means sends the option request message to the network server 2.

Then, the network server 2 receives the option request message from the user equipment 1, generates a corresponding option response message according to the option request message and sends it to the user equipment 1.

To be specific, after receiving the option request message from the user equipment 1, the network server 2 retrieves the indication information of inquiring day trade records in the option request message, and looks for the notification information corresponding to the indication information of inquiring day trade records from the database according to the indication information of inquiring day trade records.

Further, the notification information comprises the day trade information of the account.

Then, the network server 2 generates the option response message corresponding to the option request message according to the notification information and sends it to the user equipment 1.

Then, the first receiving means 101 receives the option response message from the network server 2, and the first display means 102 retrieves another notification information from the option response message and presents it to the user by the display screen.

To be specific, the first receiving means 101 receives the option response message from the network server 2.

Then, the first display means 102 retrieves the another notification information from the option response message, generates corresponding display content (e.g. menu) according to the notification information and presents it to the user to obtain what he/she wants, i.e. the day trade information of the account.

After browsing the service content that he/she wants, the user could stop the communications between the user equipment 1 and the network server 2 through the input of the indication information which indicates the stop of the communications. For instance, the user could stop the communications between the user equipment 1 and the network server 2 by clicking the key of "exit" on the touch panel of the user equipment 1.

Of course, if there is no further input information received from the user during predetermined time duration, the user equipment 1 will stop the communications between the user equipment 1 and the network server 2 automatically.

The user could also stop the communications between the user equipment 1 and the network server 2 at any time during the communications.

Abovementioned communications refers to the condition of there being two communications between the user equipment 1 and the network server 2 that the user eventually obtain what he/she wants. The person skilled in this art could understand that there could be several communications between the user equipment 1 and the network server 2 that the user obtain what he/she wants.

In another preferable embodiment, the user types in the service code of a songs hotline to choose a song, then, the notification information presented on the display screen of the user equipment 1 comprises song names that the user could choose.

To be specific , after the user chooses a song (e.g. "the cowboy is busy" by Jay Chou) from the notification information, the first generating means generates a corresponding option request message according to the user's choice.

Further, the option request message comprises the indication information of the song name, i.e. "the cowboy is busy" that the user has chosen. With the indication information of the song name contained in the option request message, the network server 2 could generate a corresponding response message.

After the first generating means generates the option request message according to the user's choice, the first sending means sends it to the network server 2.

Then, after receiving the option request message from the user equipment 1, the network server 2 retrieves the indication information of the song name that the user has chosen from the option request message, and looks for a song corresponding to the indication information of the song name from the database according to the indication information of the song name.

Then, the network server 2 sends the RTP packet with the song that the user has chosen to the user equipment 1.

Finally, the first receiving means 101 receives the RTP packet from the network server 2 and the first display means 102 plays the music to the user.

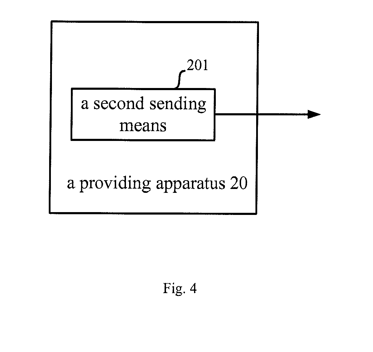

Hereinafter, referring to fig. 4, a detailed description will be given to the fourth aspect of the present invention.

The telecommunication system shown in Fig.4 is based on Session Initiation Protocol (SIP), wherein the user equipment 1 runs SIP protocol, and the network server 2 runs SIP protocol.

The user equipment 1 includes but is limited to a cell phone, PDA, video telephone. The key point of the present invention is that after the user equipment 1 receives a call response message from the network server 2, the user equipment 1 retrieves notification information which comprises one item or a plurality of items from the call response message, and then presents the notification information to a user by a display screen. Therefore, the user equipment mentioned in the present invention must comprise a display screen, which is used to present the notification information to the user by the display screen.

The network server 2 includes but is not limited to the call center, which is used to provide the user with the notification information.

Fig. 4 is a block diagram of a providing apparatus for providing notification information to a user equipment during a call period in a network server in a telecommunication system based on SIP protocol according to an embodiment of the present invention. Wherein, a providing apparatus 20 comprises a second sending means 201.

Firstly, the user equipment 1 sends a calling request message to the network server 2.

To be specific, the user equipment 1 generates the calling request message according to the user's input, and sends it to the network server 2.

Further, taking a cell phone as an example, the user's input comprises the user typing in a string of service code through the keyboard of the cell phone, or the user typing in a string of service code through the touch panel of the cell phone.

Of course, for the cell phone with voice recognition, the user could types in the service code through voice. It should be understood by those skilled in the art and will not be described in details hereon.

Secondly, the network server 2 receives the calling request message from the user equipment 1 and establishes the call link.

The content contained in the calling request message varied with the service code.

Then, the second sending means 201 contained in the providing apparatus 20 of the network server 2 generates a corresponding calling response message according to the calling request message from the user equipment 1 and sends it to the user equipment 1.

To be specific, after receiving the calling request message from the user equipment 1, the network server 2 retrieves information of the service code from the calling request message, and generates a calling response message according to the information of the service code, wherein the calling response message comprises the notification information corresponding to the information of the service code.

More specifically, the network server 2 looks for the notification information corresponding to the information of the service code from the database, and generates a calling response message.

Further, with the different service code input by the user, the notification information generated by the network server 2 varies with the service code in the calling request message.

For example, when the user types in the service code of a bank to inquire the accounts of a credit card, then the notification information generated by the network server 2 according to the calling request message from the user equipment 1 comprises day trade information, historical trade information, or residual account.

When the user types in the service code of songs hotline to choose a song, then the notification information generated by the network server 2 according to the calling request message from the user equipment 1 comprises song names that the user could choose.

After generating the calling response message according to the information of the service code, the second sending means 201 sends the calling response message to the user equipment 1, wherein the calling response message comprises the notification information corresponding to the information of the service code.

Then, the user equipment 1 receives the calling response message from the network server 2, retrieves the notification information from the calling response message and presents it to the user by the display screen.

To be specific, the user equipment 1 receives the calling response message from the network server 2, and retrieves the notification information from the calling response message.

Then, the user equipment 1 generates corresponding display content according to the notification information in the calling response message.

Further, the user equipment 1 generates the corresponding display content (for example, menu) according to the notification information in the calling response message, and presents it to the user by the display screen to obtain what he/she wants or continue to choose.

As to the condition of there only needs one communication between the user equipment 1 and the network server 2 that the user could obtain what he/she wants, the notification information presented on the display screen is what the user wants.

As to the condition of there needs several communications between the user equipment 1 and the network server 2 that the user could obtain what he/she wants, the notification information presented on the display screen comprises one item or a plurality of items for the user to choose. With the user's option on the notification information, there will be further several communications between the user equipment 1 and the network server 2 until the notification information presented on the display screen is what the user wants.

Preferably, when the notification information presented on the display screen comprises one item or a plurality of items for the user to choose, then, the user equipment 1 generates an option request message according to the user's option for the one item or one of the plurality of items, and sends it to the network server 2.

Hereinafter, taking the user inquiring the account of a credit card of a bank as an example, a detailed description will be given to the condition that the user equipment 1 generates the option request message according to the user's option for the one item or one of the plurality of items.

Assuming that the notification information presented on the display screen of the user equipment 1 comprises two items, one item is "inquiring day trade records" and the other item is "inquiring historical trade records".

To be specific, if the user only needs to inquire the day trade information, then the user chooses the item of "inquiring day trade records".

With the user's choice for the item of "inquiring day trade records", the user equipment 1 generates a corresponding option request information according to the user's choice. Further, the option request information comprises the indication information of the user's choice (hereon, the indication information of inquiring day trade records). With the indication information of inquiring day trade records in the option request information, the network server 2 could generates an option response message according to the indication information.

After generating the corresponding option request message according to the user's choice, the user equipment 1 sends the option request message to the network server 2.

Then, a second receiving means (not shown in Fig.4) contained in the providing apparatus 20 of the network server 2 receives the option request message from the user equipment 1, and a second generating means (not shown in Fig.4) contained in the providing apparatus 20 of the network server 2 generates a corresponding option response message according to the option request message, and the second sending means 201 sends it to the user equipment 1.

To be specific, after the second receiving means receives the option request message from the user equipment 1, the second generating means retrieves the indication information of inquiring day trade records in the option request message, and looks for the notification information corresponding to the indication information of inquiring day trade records from the database according to the indication information of inquiring day trade records.

Further, the notification information comprises the day trade information of the account.

Then, the second generating means generates the option response message corresponding to the option request message according to the notification information and the second sending means 201 sends it to the user equipment 1.

Then, the user equipment 1 receives the option response message from the network server 2, retrieves another notification information from the option response message and presents it to the user by the display screen.

To be specific, the user equipment 1 receives the option response message from the network server 2 and retrieves the another notification information from the option response message, wherein the notification information comprises the day trade information of the account.

Then, the user equipment 1 generates corresponding display content (e.g. menu) according to the notification information and presents it to the user to obtain what he/she wants, i.e. the day trade information of the account.

After browsing the service content that he/she wants, the user could stop the communications between the user equipment 1 and the network server 2 through the input of the indication information which indicates the stop of the communications. For instance, the user could stop the communications between the user equipment 1 and the network server 2 by clicking the key of "exit" on the touch panel of the user equipment 1.

Of course, if there is no further input information received from the user during predetermined time duration, the user equipment 1 will stop the communications between the user equipment 1 and the network server 2 automatically.

The user could also stop the communications between the user equipment 1 and the network server 2 at any time during the communications.

Abovementioned communications refers to the condition of there being two communications between the user equipment 1 and the network server 2 that the user eventually obtain what he/she wants. The person skilled in this art could understand that there could be several communications between the user equipment 1 and the network server 2 that the user obtain what he/she wants.

In another preferable embodiment, the user types in the service code of a songs hotline to choose a song, then, the notification information presented on the display screen of the user equipment 1 comprises song names that the user could choose.

To be specific, after the user chooses a song (e.g. "the cowboy is busy" by Jay Chou) from the notification information, the user equipment 1 generates a corresponding option request message according to the user's choice.

Further, the option request message comprises the indication information of the song name, i.e. "the cowboy is busy" that the user has chosen. With the indication information of the song name contained in the option request message, the network server 2 could generate a corresponding response message.

After generating the option request message according to the user's choice, the user equipment 1 sends it to the network server 2.

Then, the second receiving means receives the option request message from the user equipment 1, and the second generating means retrieves the indication information of the song name that the user has chosen from the option request message, and looks for a song corresponding to the indication information of the song name from the database according to the indication information of the song name.

Then, the second generating means packets the song into a RTP packet, and the second sending means 201 sends the RTP packet with the song that the user has chosen to the user equipment 1.

Finally, the user equipment 1 receives the RTP packet from the network server 2 and plays the music to the user.

As the embodiments of the present invention have been described above, it should be understood that the present invention is not limited to the above specific embodiments. Various modifications or alterations can be made by those skilled in the art without departing from the scope as defined by the appended claims.

## Claims

1. A method of obtaining notification information from a network server during a call period in a user equipment in a telecommunication system based on SIP protocol comprising:
a. receiving a call response message from the network server after the call is established;
b. retrieving notification information from the call response message and presenting the notification information to a user by a display screen.

2. The method according to claim 1, wherein the notification information comprises one item or a plurality of items for the user to choose, and after step b, the method further comprises:
c. generating an option request message according to the user's option for the one item or one of the plurality of items;
d. sending the option request message to the network server;
e. receiving an option response message corresponding to the option request message form the network server;
f. retrieving another notification information from the option response message and presenting the another notification information to the user by a display screen;
repeating step c to step f, until predetermined condition is satisfied.

3. The method according to claim 2, wherein the predetermined condition comprises any one of the following items:
- receiving indication information to stop operation from the user;
- no further input information received from the user during predetermined time duration.

4. The method according to any one of claims 1 to 3, wherein the user equipment comprises a user equipment running SIP protocol.

5. A method of providing notification information to a user equipment during a call period in a network server in a telecommunication system based on SIP protocol comprising:
A. sending a call response message to the user equipment after the call is established, wherein the call response message comprises notification information to present to a user.

6. The method according to claim 5, wherein after step A, the method further comprises:
B. receiving an option request message from the user equipment;
C. generating an option response message corresponding to the option request message, wherein the option response message comprises another notification information to present to the user;
D. sending the option response message to the user equipment.

7. The method according to claim 5 or 6, wherein the network server comprises a network server running SIP protocol, and the network server is a call center server.

8. An obtaining apparatus for obtaining notification information from a network server during a call period in a user equipment in a telecommunication system based on SIP protocol comprising:
a first receiving means for receiving a call response message from the network server after the call is established;
a first display means for retrieving notification information from the call response message and presenting the notification information to a user by a display screen.

9. The obtaining apparatus according to claim 8, wherein the notification information comprising one item or a plurality of items for the user to choose, and the obtaining apparatus further comprises:
a first generating means for generating an option request message according to the user's option for the one item or one of the plurality of items;
a first sending means for sending the option request message to the network server;
the first receiving means further for receiving an option response message corresponding to the option request message form the network server;
the first display means further for retrieving another notification information from the option response message and presenting the another notification information to the user by a display screen;
the first generating means, the first sending means, the first receiving means and the first display means performing their respective functions repeatedly, until predetermined condition is satisfied.

10. The obtaining apparatus according to claim 9, wherein the predetermined condition comprises any one of the following items:
- receiving indication information to stop operation from the user;
- no further input information received from the user during predetermined time duration.

11. The obtaining apparatus according to any of claims 8 to 10, wherein the user equipment comprises a user equipment running SIP protocol.

12. A providing apparatus for providing notification information to a user equipment during a call period in a network server in a telecommunication system based on SIP protocol comprising:
a second sending means for sending a call response message to the user equipment after the call is established, wherein the call response message comprises notification information to present to a user.

13. The providing apparatus according to claim 12, wherein the providing apparatus further comprises:
a second receiving means for receiving an option request message from the user equipment;
a second generating means for generating an option response message corresponding to the option request message, wherein the option response message comprises another notification information to present to the user;
the second sending means further for sending the option response message to the user equipment.

14. The providing apparatus according to claim 12 or 13, wherein the network server comprises a network server running SIP protocol, and the network server is a call center server.

15. A user equipment comprising the obtaining apparatus for obtaining notification information from a network server during a call period according to any of claims 8 to 11.

16. A network server comprising the providing apparatus for providing notification information to a user equipment during a call period according to any of claims 12 to 14.

17. A telecommunication system based on SIP protocol comprising a user equipment and a network server, wherein the user equipment comprises the obtaining apparatus for obtaining notification information from the network server during a call period according to any of claims 8 to 11, and the network server comprises the providing apparatus for providing notification information to the user equipment during a call period according to any of claims 12 to 14.
